# EUROPEAN PATENT APPLICATION

(11) **EP 4 607 072 A1**
(43) Date of publication of application: **27.08.2025**
(21) Application number: 25154048.0
(22) Date of filing: 27.01.2025
(51) Int. Cl.: F16L 13/14

(54) **GASKET, PARTICULARLY FOR PRESS FITTING CONNECTORS AND THE LIKE**

(30) Priority: 26.02.2024 IT 202400003958
(71) Applicant: RUBINETTERIE BRESCIANE BONOMI SPA, 25064 Gussago (BS) (IT)
(72) Inventor: BONOMI, Aldo, 25065 LUMEZZANE BS (IT)
(74) Representative: Modiano, Micaela Nadia

(57) **Abstract**

A gasket (1), particularly for press fitting connectors and the like, comprising an annular body (2) having a substantially circular radial cross-section. More specifically, the radial cross-section has at least one transverse widening (3) which extends in a direction that is substantially parallel to the central axis (5) of the annular body (2) at at least one between the outer profile (6) and the inner profile (7) of the annular body (2), so as to form a substantially cylindrical surface (X) designed to come into contact with an object which is foreign to the gasket (1) as a result of transverse compression in a radial direction.

## Description

The present invention relates to a gasket, particularly for press fitting connectors and the like.

In the water, heating and sanitary field the use of press fitting systems, inseparable joints between pipes of a system obtained by means of a pressing operation carried out with the help of electromechanical pressing machines, is well known.

The conception of a press fitting system stems from the need to obtain joints that are easy to provide and install, ensuring minimal effort to the operator and allowing him to operate in confined areas without requiring complex installation operations such as welding or brazing.

Pressing provided by pressing machines permanently deforms the pressing end of the fitting and the end of an external duct with which the joint is to be provided, so as to achieve both a mechanical seal, i.e., resistance to separation between the fitting and the duct, and a hydraulic seal.

The hydraulic seal is achieved by using a gasket, specifically an O-ring, mounted on the press fitting and accommodated within a hollow circular bulge created proximate to an end portion of said fitting.

Such gaskets of the known type are not without drawbacks, among which is the fact that they do not provide an optimal hydraulic seal.

In fact, such gasket, by having a circular cross-section, as a result of the pressing operation does not completely fill the volume of the circular bulge in which it is accommodated; therefore, empty space remains within the circular bulge and allows the penetration of a fluid that is conveyed within the system in which such a press fitting is used.

The penetration of fluid into the volume of the circular bulge not occupied by the seal causes limited life of the j oint.

The aim of the present invention is to provide a gasket, particularly for press fitting connectors and the like, that is capable of obviating the drawbacks noted above, overcoming the limitations of the background art.

Within this aim, an object of the present invention is to provide a gasket that improves the hydraulic seal of the press fitting with respect to the background art.

Another object of the present invention is to provide a gasket and a press fitting that can be provided by means of technologies which are known in the water, heating and sanitary sector so as to be economically competitive.

A further object of the present invention is to provide a gasket which, by filling the volume of the circular bulge (toroidal chamber) of the press fitting inlet, drastically decreases the volume of liquid that can come in contact with the gasket when it is in the pressed condition (after installation by pressing).

A further object of the present invention is to provide a gasket capable of giving the greatest assurances of reliability, efficiency and operation.

This aim, as well as these and other objects which will become better apparent hereinafter, are achieved by a gasket, particularly for press fitting connectors and the like, comprising an annular body having a substantially circular radial cross-section;
characterized in that said radial cross-section has at least one transverse widening which extends in a direction that is substantially parallel to the central axis of said annular body at at least one between the outer profile and the inner profile of said annular body so as to form a substantially cylindrical surface designed to come into contact with an object which is foreign to said gasket as a result of transverse compression in a radial direction.

Further characteristics and advantages of the invention will become better apparent from the description of a preferred but not exclusive embodiment of a gasket, particularly for press fitting connectors and the like, illustrated by way of non-limiting example with aid of the accompanying drawings, wherein:
Figure 1 is a perspective view of the gasket according to the present invention;
Figure 2 is a perspective view of a hydraulic joint provided by means of a press fitting connector, before the pressing operation;
Figure 3 is a partial sectional view of the joint shown in Figure 2, taken along the plane IV-IV;
Figure 4 is a perspective view of the joint provided by means of the press fitting connector shown in Figure 2, after the pressing operation;
Figure 5 is a partial section of the joint shown in Figure 3, taken along the plane V-V.

With reference to the figures, the gasket, particularly for press fitting connectors and the like, generally designated by the reference numeral 1, comprises an annular body 2 made of an elastomeric material and having a substantially circular radial cross-section.

According to the invention, the radial cross-section of the joint has at least one transverse widening 3 which extends in a direction that is substantially parallel to the central axis 5 of the annular body 2 at at least one between the outer profile 6 and the inner profile 7 of the annular body 2, so as to form a substantially cylindrical surface designed to come into contact with an object that is foreign to the gasket 1 as a result of transverse compression of said transverse cross-section in a radial direction.

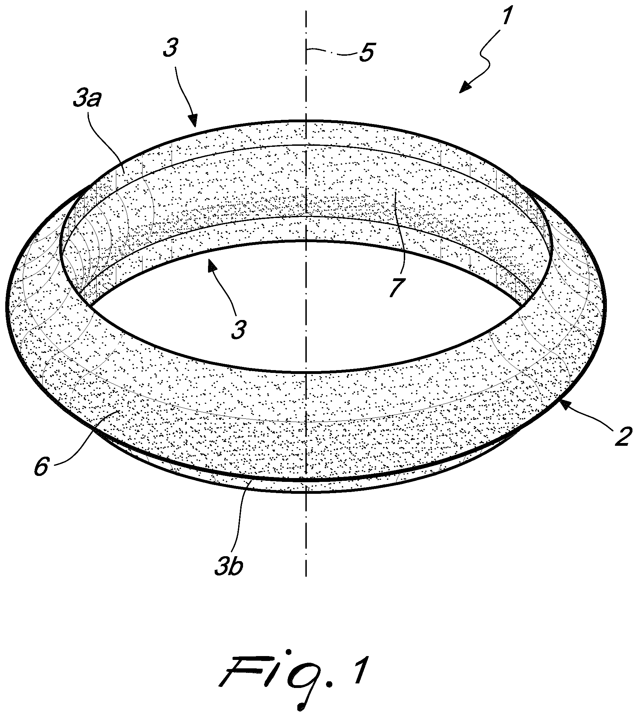

Advantageously, with particular reference to Figure 1, in the proposed embodiment the transverse widening 3 comprises two portions 3a and 3b, termed "lobes" in the jargon, which are mutually opposite with respect to the plane of circumferential extension of the annular body 2 of the gasket 1 and have a substantially triangular geometric shape.

Moreover, conveniently, the transverse widening 3, i.e., the two lobes 3a and 3b, extends circumferentially along the annular body 2 at the inner profile 7.

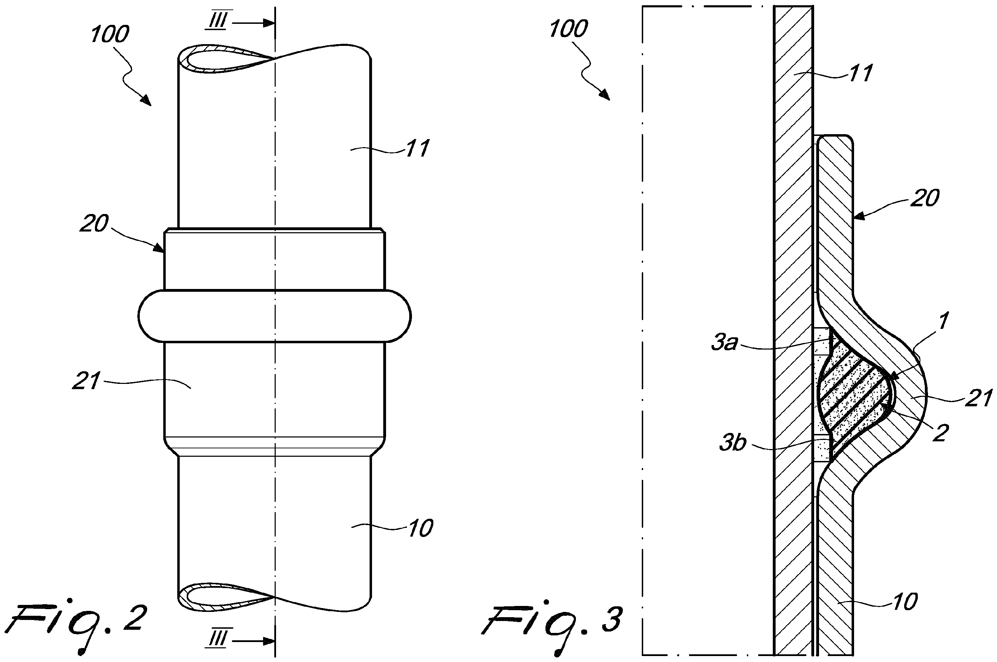

With reference to Figures 2 to 5, the joint obtained by press fitting connector shown therein and generally designated by the reference numeral 100 comprises a press fitting connector 10 and a portion of pipe 11.

Conveniently, said press fitting connector 10 comprises at least one gasket 1 such as the one shown in Figure 1.

Advantageously, said press fitting connector 10 is adapted to be fitted over the pipe portion 11.

As can be seen in Figure 3, the press fitting connector 10 comprises a single gasket 1, which is interposed between an end portion 20 of the press fitting connector 10 and the pipe portion 11 in order to provide a hydraulic seal between them, subsequent to an operation for pressing said end portion 20 onto the pipe portion 11.

Advantageously, the press fitting connector 10 comprises a radially protruding circular bulge 21, which is formed at the end portion 20 of the press fitting connector 10 and is adapted to accommodate the gasket 1.

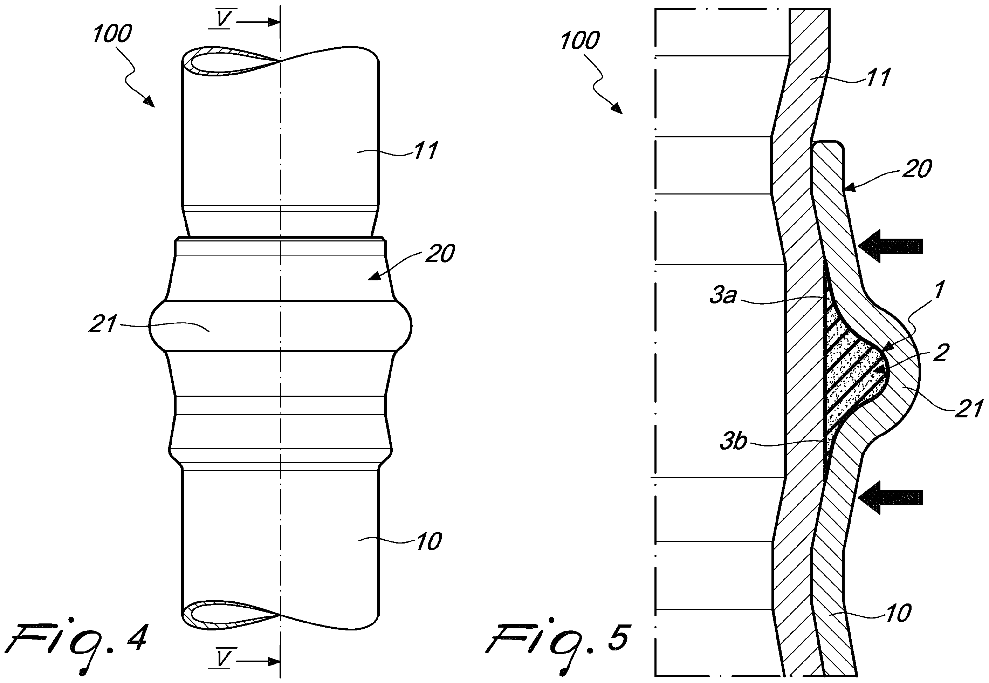

Figure 4 shows a joint 100 after the pressing operation adapted to ensure both a mechanical seal and a hydraulic seal.

As shown in Figure 5, advantageously, subsequent to such a pressing operation the gasket 1 substantially fills the entire volume defined between the inner surface of the end portion 20, at the circular bulge 21, and the outer surface of the pipe portion 11, adhering to the latter with its substantially cylindrical surface formed on the inner profile 7.

In this way, conveniently, contact between the surface of the gasket 1 exposed to a fluid conveyed within a system in which the joint 100 is employed and the fluid itself is minimized.

In other words, as a result of pressing, the gasket 1 undergoes a radial compression, elongating axially so as to substantially perfectly reproduce the shape of the cavity inside the circular bulge 21.

The operation of the gasket 1 and of the press fitting connector, according to the invention, can be deduced easily from what has been described so far.

In practice it has been found that the gasket according to the present invention fully achieves the intended aim and objects, since it allows to substantially provide a perfect hydraulic seal by virtue of the fact that it is a conveniently contoured gasket which fills substantially the entire internal volume of the circular bulge that is present at an end portion of the press fitting connector and adheres substantially perfectly to the surfaces that surround it.

This results in a better hydraulic seal and durability of the joint over time than offered by O-ring gaskets of the known type.

Moreover, a gasket designed in this way allows for the drastic decrease in the volume of liquid (the example of drinking water also applies) that can come into contact with the surface of the gasket when it is in a pressed condition. The use of a geometric shape such as the one described, therefore, can be effective if one wishes to reduce the ratio of the surface area of the gasket in contact with the fluid to the inner surface area of the connector in contact with the fluid.

A further advantage of the gasket according to the invention is that it provides a joint between the press fitting connector on which it is mounted and an external duct that does not substantially cause leakage or instability.

The gasket thus conceived is susceptible of numerous modifications and variations, all of which are within the scope of the accompanying claims.

All the details may furthermore be replaced with other technically equivalent elements.

In practice, the materials used, so long as they are compatible with the specific use, as well as the contingent shapes and dimensions, may be any according to the requirements and the state of the art.

The disclosures in Italian Patent Application No. 102024000003958 from which this application claims priority are incorporated herein by reference.

Where technical features mentioned in any claim are followed by reference signs, such reference signs have been inserted for the sole purpose of increasing the intelligibility of the claims and accordingly such reference signs do not have any limiting effect on the interpretation of each element identified by way of example by such reference signs.

## Claims

1. A gasket (1), particularly for press fitting connectors and the like, comprising an annular body (2) having a substantially circular radial cross-section; **characterized in that** said radial cross-section has at least one transverse widening (3) which extends in a direction that is substantially parallel to the central axis (5) of said annular body (2) at at least one between the outer profile (6) and the inner profile (7) of said annular body (2) so as to form a substantially cylindrical surface designed to come into contact with an object which is foreign to said gasket (1) as a result of transverse compression in a radial direction.

2. The gasket (1) according to claim 1, **characterized in that** said transverse widening (3) comprises two portions (3a, 3b) which are mutually opposite with respect to a plane of circumferential extension of said annular body (2).

3. The gasket (1) according to claim 2, **characterized in that** said two portions (3a, 3b) have a substantially triangular geometric shape.

4. The gasket (1) according to one or more of the preceding claims, **characterized in that** said transverse widening (3) is circumferentially extended along said annular body (2) at said inner profile (7).

5. The gasket (1) according to one or more of the preceding claims, **characterized in that** it is made of elastomeric material.

6. A press fitting connector (10), **characterized in that** it comprises at least one gasket (1) according to one or more of the preceding claims.

7. The press fitting connector (10) according to claim 6, **characterized in that** it is designed to be fitted over a portion of a pipe (11); said gasket (1) being interposed between an end portion (20) of said press fitting connector (10) and said pipe portion (11) for the provision of a hydraulic seal between said press fitting connector (10) and said pipe portion (11) as a result of an operation for pressing said end portion (20) against said pipe portion (11).

8. The press fitting connector (10) according to claim 6 or 7, **characterized in that** it comprises a radially protruding circular bulge (21) formed at said end portion (20) and adapted to accommodate said gasket (1).

9. The press fitting connector (10) according to one or more of claims 5 to 7, **characterized in that** subsequent to said pressing operation said gasket (1) substantially fills the entire volume defined between the inner surface of said end portion (20), at said circular bulge (21), and the outer surface of said pipe portion (11), adhering to said pipe portion (11).
